# EUROPÄISCHE PATENTSCHRIFT

(11) **EP 2 478 603 B1**
(45) Veröffentlichungstag und Bekanntmachung des Hinweises auf die Patenterteilung: **21.08.2013**
(21) Anmeldenummer: 10754493.4
(22) Anmeldetag: 15.09.2010
(51) Int. Cl.: H02G 1/08

(54) **EINZIEHFEDERSPITZE MIT FUSSSTÜCK**
Pulling rope tip with foot joint
Pointe d'un ressort de tirage dotée d'un élément de pied

(30) Priorität: 15.09.2009 EP 09170333; 15.09.2009 EP 09170336
(43) Veröffentlichungstag der Anmeldung: 25.07.2012
(73) Patentinhaber: Immothal Investment GmbH, 5303 Thalgau (AT)
(72) Erfinder: HASLACHER, Andreas, A-5310 Mondsee (AT)
(74) Vertreter: Babeluk, Michael
(86) Internationale Anmeldenummer: PCT/EP2010/063507
(87) Internationale Veröffentlichungsnummer: WO 2011/032953

(56) Entgegenhaltungen:
- DE-U1- 29 909 420
- JP-A- 10 336 829
- US-A- 2 750 152
- US-B1- 6 182 432

## Beschreibung

Die Erfindung betrifft eine Einziehfederspitze mit Fußstück, einem flexiblen Teil und einem Kopfstück für Einziehfedern zum Einziehen von Leitungen in Rohre und Hohlräume oder dergleichen gemäß dem Oberbegriff von Patentanspruch 1.

Einziehfedern für diese Verwendungszwecke bestehen normalerweise aus einem Teil mit einer an der Spitze angebrachten Haltevorrichtung für die einzuziehenden Leitungen. Diese sind aber bei komplizierteren Rohrsystemen mit sich verändernden Rohrparametern, wie zum Beispiel Durchmesser- oder Richtungsänderungen, schlecht geeignet, da sie einerseits eine gewisse Stabilität, damit sie problemlos auch durch längere Rohrsysteme geschoben werden können, und andererseits auch eine gewisse Flexibilität aufweisen müssen, damit sie auch bei engeren Kurven nicht stecken bleiben, und dies durch eine einteilige Ausführung nicht erreicht werden kann. Die in der WO 2006/027400 A1, der US 3,110,478 A1 und der EP 1 058 361 A1 offenbarten Einziehfedern zeichnen sich alle dadurch aus, dass das gerade beschriebene Gerüst durch eine Einziehfederspitze ergänzt wird, wobei diese durch erhöhte Flexibilität eine Verbesserung darstellen soll. Dennoch ist ein problemloses Einziehen in kompliziertere Rohrsysteme nicht gewährleistet.

Die US 2,750,152 A offenbart eine Einziehfederspitze, die aus einem Stahlkabel besteht, das mit einer Kunststoffhülle umgeben ist. Die Kunststoffhülle dient primär dazu, das Stahlkabel vor Umwelteinflüssen zu schützen, erhöht aber auch die Steifigkeit insgesamt.

Aus der US 6,182,432 B ist es bekannt, zur Erleichterung des Einführens der Einziehfeder eine Einziehfederspitze mit verringerter Steifigkeit vorzusehen. Alternativ schlägt diese Druckschrift vor, die Einziehfeder selbst in ihrem vorderen Bereich mit erhöhter Flexibilität auszuführen. Durch diese Ausführung ist es möglich, die Einziehfeder auch unter ungünstigen Verhältnissen vergleichsweise problemlos einzuführen. Dennoch ist diese Lösung nicht zufriedenstellend, da die Herstellung einer Einziehfeder mit kontinuierlich abnehmender Steifigkeit aufwendig ist und im Spitzenbereich durch den verringerten Querschnitt eine Schwachstelle gegeben ist, die die Übertragung großer Zugkräfte beim Einziehen von Kabeln oder dergleichen verbietet.

Aufgabe der vorliegenden Erfindung ist es, diese Nachteile zu vermeiden und eine Einziehfeder anzugeben, die durch Variation der Steifigkeit eine verbesserte Funktion aufweist und selbst in komplexere Rohrleitungssysteme oder dergleichen leicht einführbar ist und dennoch leicht herstellbar ist und hohe Zugkräfte übertragen kann.

Eine weitere Aufgabe der Erfindung ist es, eine Einziehfeder anzugeben, die robust ist und für eine Vielzahl von Anwendungen geeignet ist.

Diese Aufgabe wird erfindungsgemäß durch eine Lösung gemäß Patentanspruch 1 gelöst. Insbesondere ist vorgesehen, dass die Flexibilität des flexiblen Teils vom Fußstück in Richtung des Kopfstückes zunimmt, wobei sich zumindest ein Abschnitt des flexiblen Teils vom Fußstück in Richtung des Kopfstückes verjüngt, indem die Schichtdicke abnimmt, und dass der Zuganker mit einer Hülle aus Kunststoff umspritzt ist.

Als Flexibilität wird hier der Kehrwert der Biegesteifigkeit verstanden.

Überraschenderweise kann dadurch eine bestmögliche Kombination von Festigkeit und Flexibilität gefunden werden. Die Erfindung stellt insofern eine ideale Lösung dar, da an der Einziehfederspitze dort, wo die Flexibilität am Meisten zum Tragen kommt, nahe am Kopfstück, die Biegesteifigkeit am geringsten ist, und eben diese dort, wo die Steifigkeit bzw. Festigkeit zwecks der Durchschiebbarkeit durch ein Rohrsystem am notwendigsten ist, im hinteren Bereich und damit nahe des Fußstückes, zunimmt. So kann das Kopfstück der Einziehfeder sehr sensitiv gegenüber Rohrparameteränderungen sein und trotzdem ein Einziehfederkörper mit durchaus größerer Biegefestigkeit benutzt werden.

Wesentlich ist die hohe Belastbarkeit in Zugrichtung, die durch den Zuganker bewirkt wird, der auf Zugfestigkeit optimiert ist und beispielsweise aus einem Drahtseil besteht. Durch die hohe Zugspannung des Materials kann der Querschnitt des Zugankers klein gehalten werden, wodurch die Flexibilität nicht beeinträchtigt wird.

Die Erhöhung der Elastizität in Richtung des Kopfstückes wird erfindungsgemäß insbesondere dadurch bewirkt, dass sich der elastische Teil der Einziehfederspitze vom Fußstück in Richtung des Kopfstückes verjüngt. Damit können mit minimalen Aufwand beliebig gestaltete Profile hergestellt werden, die, abhängig von der Stärke, Länge und Form der Verjüngung, verschiedene Biegeverhalten aufweisen.

Durch entsprechende Variation der Dicken des flexiblen Teils im Bezug auf dessen Bereich können so Einziehfedern mit verschiedensten Elastizitätsverhalten erzeugt und damit für verschiedene Anwendungen die jeweils idealen Einziehfedern geschaffen werden.

Der flexible Teil besteht aus einem Zuganker und einer als Mantel ausgebildeten Hülle, wobei ersterer von einem biegsamen Stahl-, Glasfaser-, Polyesterseil oder dergleichen dargestellt werden kann, was die Stabilität der Einziehfeder garantiert und ein Reißen oder Brechen bei großer Belastung vorbeugt. Dieser Zuganker wird vom Mantel geschützt und stabilisiert, wobei die Dicke und die Materialbeschaffenheit des Mantels neben der Art und Ausführung des Zugankers die Elastizität des flexiblen Teils beeinflusst. Der Mantel umgibt den Zuganker und ist umspritzt. Dies bedeutet, dass der Kunststoff des Mantels in einem Spritzgussvorgang hergestellt ist, bei dem der Zuganker in der Form eingelegt ist. Dadurch ergibt sich eine innige Verbindung zwischen Zuganker und Mantel.

Oft stellt ein linearer Anstieg der Elastizität des elastischen Teils in Richtung des Kopfstückes eine bevorzugte Variante dar, welche durch die Vielfältigkeit der Anwendungen einen besonders hohen Verwendungswert hat.

Die Verringerung der Steifigkeit zur Spitze hin kann aber auch abgestuft erfolgen, indem eine oder mehrere Verjüngungen hintereinander vorgesehen sind oder aber auch indem mehrere unterschiedliche Werkstoffe mit unterschiedlichem Elastizitätsmodul in Axialrichtung aufeinanderfolgen, die beispielsweise im Mehrkomponenten-Spritzgussverfahren um den Zuganker geformt werden.

Damit eine Leitung nach erfolgreicher Durchdringung eines Rohrsystems durchgezogen werden kann, kann eine Haltevorrichtung am Kopfstück der Einziehfeder angebracht sein, an welcher die Leitung angebracht werden kann, um die Einziehfeder wieder zurückzuziehen und damit das Kabel in die gewünschte Position im Rohrsystem zu bringen.

Um die Einziehfederspitze auf einen Einziehfederkörper anbringen zu können, kann am Fußstück eine Haltevorrichtung, zum Beispiel in Form einer Klemmvorrichtung oder eines Gewindes angebracht sein. Insbesondere ist es günstig, wenn die Einziehfederspitze abnehmbar am Einziehfederkörper befestigt ist.

Das Verhältnis vom Außendurchmesser des Mantels zum Durchmesser des Zugankers ist von Wichtigkeit, um die entsprechenden Biege- und Festigkeitseigenschaften einzustellen. Normalerweise wird ein recht dünner Zuganker im Vergleich zum Mantel gewählt.

Damit sich die Einzelteile der Einziehfederspitze bei starker Zugspannung nicht voneinander lösen wird die Befestigung des flexiblen Teils am Kopf- bzw. Fußteil so gewählt, dass sie einerseits leicht zu fertigen und billig ist, andererseits auch den entsprechenden Belastungen stand halten kann. Dazu ist eine Klemmung des Zugankers in einer dafür vorgesehenen Bohrung oder Aushöhlung im Fuß- bzw. Kopfteil eine mögliche Ausführungsvariante, die bereits ihre Vorteile unter Beweis gestellt hat.

Bei einer bevorzugten Fertigungsmöglichkeit steht der Zuganker in der Fertigung unter Vorspannung, so kann ein direktes Aufspritzen des Mantelmateriales erfolgen und die Gleichmäßigkeit und Qualität der Zugankerumspritzung mit dem Mantel garantiert werden. Andererseits wird dadurch eine dauerhafte Vorspannung des Zugankers gegenüber des Mantels erwirkt, wodurch die Biege- und Festigkeitsqualität noch weiter verbessert wird.

Insbesondere kann am Kopfstück eine abnehmbare Kappe vorgesehen sein. Diese kann alternativ als Kugel, Konus oder dgl., entweder mit oder ohne Zugöse ausgebildet sein.

Die Einziehfederspitze kann an einem Einziehfederkörper beliebiger Art angebracht werden, wobei es natürlich von Vorteil wäre, wenn ein Einziehfederkörper mit ausgewählter Biegefestigkeit benutzt werden würde, um die Effektivität der Einziehfederspitze zu maximieren.

Der oben genannte Einziehfederkörper kann nun aus Stahl oder besonders bevorzugt aus Kunststoff gefertigt sein, beide Varianten tragen mit ihren Materialien entsprechende Vorteile mit ein. Bei der Herstellung aus Stahl bietet sich insbesondere die Ausführung als biegsame Welle an.

Der oben genannte Einziehfederkörper kann außerdem gewendelt, d.h. verdrillt sein, was besondere Vorteile bei der Verwendung von Geräten, die das Einziehen der Einziehvorrichtung erleichtern, bringt.

Das Faktum, dass die minimale, auf dem flexiblen Teil der Einziehfederspitze auftretende Flexibilität größer ist als die maximale, auf dem Einziehfederkörper auftretende Flexibilität, kann überraschenderweise durchaus von Wichtigkeit sein, da so zum Beispiel ein Schiebekraftverlust vermieden werden kann, der dadurch entsteht, dass sich der Einziehfederkörper anstatt der Einziehfederspitze zuerst in einer Situation mit sich verändernder Rohrbeschaffenheit, beispielsweise einer Kurve, beugt.

Die Erfindung wird nachfolgend anhand von in Zeichnungen dargestellten Ausführungsbeispielen, auf die sie jedoch nicht beschränkt sein soll, näher veranschaulicht. Im Einzelnen zeigt:
- Fig. 1: eine Seitenansicht einer Variante der Einziehfederspitze 1;
- Fig. 2: zeigt einen axialen Schnitt durch eine nicht erfindungsgemäße Variante der Einziehfederspitze 1 sowie den Teil der Einziehfederkörpers 12, der an der Einziehfederspitze 1 anliegt;
- Fig. 3: zeigt eine erfindungsgemäße Ausführungsvariante der Einziehfederspitze mit einem flexiblen Teil 3, der aus einem Mantel 16 und einem Zuganker 13 besteht, im Schnitt;
- Fig. 4: zeigt eine weitere Variante der Einziehfederspitze 1.

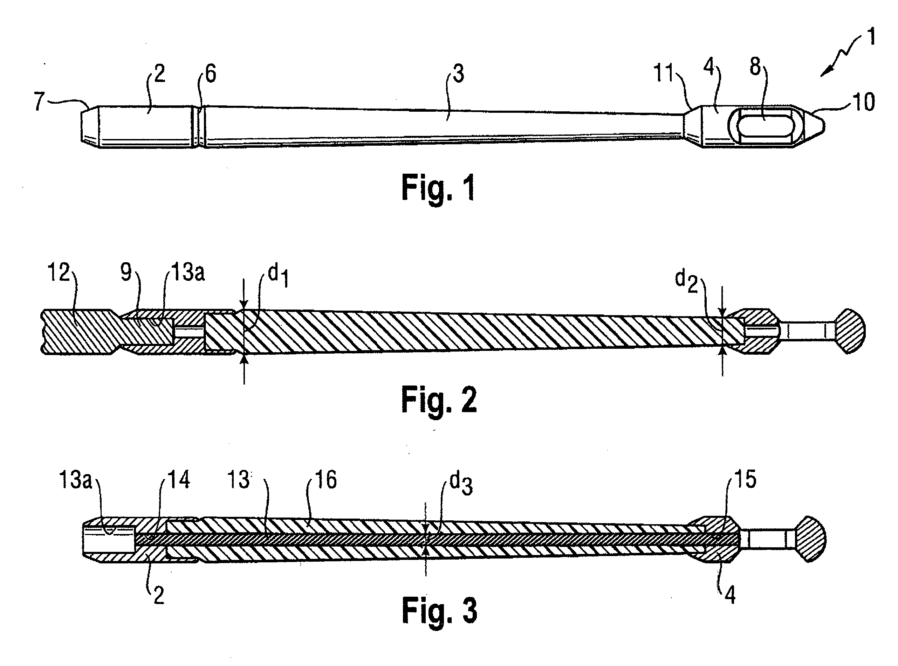

Die in Fig. 1 dargestellte Variante ist eine Einziehfederspitze 1, die sich aus einem sich verjüngendem flexiblen Teil 3, einem Fußstück 2 und einem Kopfstück 4 zusammensetzt, wobei der flexible Teil 3 von dem Fußstück 2 und dem Kopfstück 4 begrenzt wird. Das Fußstück 2 hat an der dem flexiblen Teil 3 zugewandten Seite eine Einkerbung 6, um den flexiblen Teil 3 klemmend zu halten und an der dem flexiblen Teil 3 abgewandten Seite eine Abschrägung 7. Das Kopfstück 4 weist eine in dieser Ausführungsvariante durch eine Öse ausgeformte Haltevorrichtung 8 für Leitungen und an beiden Enden Abschrägungen 10 und 11 auf.

Der in Fig. 2 dargestellte axiale Schnitt offenbart eine Aufnahme in Form einer zylindrischen Aufnahme in der Form einer Aushöhlung 13a im Fußstück 2, die, wenn die Einziehfederspitze 1 an einem Einziehfederkörper 12 angebracht ist, von einem Endstück 9 des Einziehfederkörpers 12 ausgefüllt wird, um eine auf Zug belastbare Verbindung zu ergeben. Außerdem zeigt sie, dass das Fußstück 2 und das Kopfstück 4 den flexiblen Teil 3 überragen und umschließen und so einen gefestigten Kontakt herzustellen.

Der Durchmesser d₁ des flexiblen Teils 3 im Bereich des Fußteils 2 verhält sich zum Durchmesser d₂ des flexiblen Teils 3 im Bereich des Kopfteils 4 wie 1:0,8. Dadurch kann eine optimale Variation der Steifigkeit erreicht werden.

Bei der Ausführungsvariante von Fig. 3 ist ein Zuganker 13 im Fußstück 2 in einer zylindrischen Einhöhlung 14 und im Kopfstück 4 in einer zylindrischen Einhöhlung 15 eingebettet, sowie zwischen dem Fuß- und Kopfstück 2 und 4 von einem Mantel 16 umhüllt.

Das Verhältnis vom Außendurchmesser d₁, d₂ des Mantels 16 zum Durchmesser d₃ des Zugankers 13 bewegt sich zwischen 1:0,1 und 1:0,5. Dadurch kann eine optimale Kombination von Zugfestigkeit und Biegesteifigkeit erreicht werden.

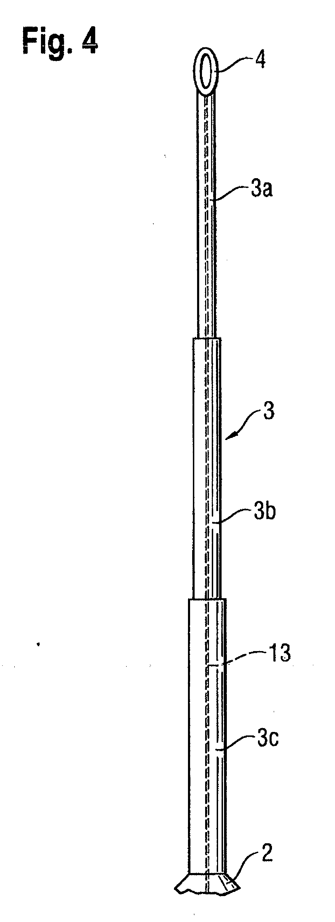

Fig. 4 zeigt eine Variante der Einziehfederspitze 1 dargestellt, bei der der flexible Teil 3 aus drei Teilstücken 3a, 3b und 3c mit abgestuftem Durchmesser einstückig zusammengesetzt ist, wodurch die Steifigkeit zum Fußstück 2 hin stufenweise zunimmt. Der Zuganker 13 ist wie bisher zentrisch eingebettet.

## Patentansprüche

1. Einziehfederspitze (1) für Einziehfedern (12) zum Einziehen von Leitungen in Rohre und Hohlräume oder dgl., mit einem Fußstück (2) zur Befestigung an der Einziehfeder, einem flexiblen Teil (3) und einem Kopfstück (4), wobei der flexible Teil (3) einen Zuganker (13) aufweist, der an seinem einen Ende mit dem Fußstück (2) und an seinem anderen Ende mit dem Kopfstück (4) verbunden ist und eine Hülle (16) aus Kunststoff aufweist, die den den Zuganker (13) umgibt, **dadurch gekennzeichnet, dass** die Flexibilität des flexiblen Teils (3) vom Fußstück (2) in Richtung des Kopfstückes (4) zunimmt, wobei der Zuganker (13) mit der Hülle (16) aus Kunststoff umspritzt ist, deren Schichtdicke sich auf zumindest einem Abschnitt des flexiblen Teils (3) vom Fußstück (2) in Richtung des Kopfstückes (4) verjüngt.

2. Einziehfederspitze (1) nach Anspruch 1 **dadurch gekennzeichnet, dass** die Flexibilität des flexiblen Teils (3) vom Fußstück (2) in Richtung des Kopfstückes (4) linear zunimmt.

3. Einziehfederspitze (1) nach einem der Ansprüche 1 bis 2, **dadurch gekennzeichnet, dass** am Kopfstück (4) eine Haltevorrichtung (8) für die durchzuziehende Leitung angebracht ist.

4. Einziehfederspitze (1) nach einem der Ansprüche 1 bis 3, **dadurch gekennzeichnet, dass** am Fußstück (2) eine Aufnahme (13a) für einen Einziehfederkörper (12) angebracht ist.

5. Einziehfederspitze (1) nach einem der Ansprüche 1 bis 4, **dadurch gekennzeichnet, dass** sich das Verhältnis vom Durchmesser (d₁) des flexiblen Teils (3) am Fußteil (2) zum Durchmesser (d₂) des flexiblen Teils (3) am Kopfteil (4) in einem Bereich von 1:0,9 und 1:0,55 bewegt.

6. Einziehfederspitze (1) nach einem der Ansprüche 1 bis 5, **dadurch gekennzeichnet, dass** der Zuganker (13) des flexiblen Teils (3) aus einem Stahlseil oder aus Kohlenstofffasern besteht.

7. Einziehfederspitze (1) nach einem der Ansprüche 5 bis 6, **dadurch gekennzeichnet, dass** sich das Verhältnis vom Außendurchmesser (d₁, d₂) der Hülle (16) zum Durchmesser (d₃) des Zugankers (13) zwischen 1:0,1 und 1:0,5 bewegt.

8. Einziehfederspitze (1) nach einem der Ansprüche 1 bis 7, **dadurch gekennzeichnet, dass** der Zuganker (13) am Kopfstück (4) und/oder am Fußstück (2) in einer vorzugsweise zylindrischen Einhöhlung (14, 15) eingebettet oder festgeklemmt ist.

9. Einziehfederspitze (1) nach einem der Ansprüche 1 bis 8, **dadurch gekennzeichnet, dass** der Zuganker (13) in Bezug auf die Hülle (16) vorgespannt ist.

10. Einziehfederspitze (1) nach einem der Ansprüche 1 bis 9, **dadurch gekennzeichnet, dass** am Kopfstück (4) eine abnehmbare Kappe vorgesehen ist.

11. Einziehfeder zum Einziehen von Leitungen in Rohre und Hohlräume oder dergleichen, **dadurch gekennzeichnet, dass** diese aus einem Einziehfederkörper (12) und einer Einziehfederspitze (1), welche einem der Ansprüche 1 bis 10 entspricht, besteht und dass der Einziehfederkörper (5) vorzugsweise aus Kunststoff gefertigt ist.

12. Einziehfeder zum Einziehen von Leitungen in Rohre und Hohlräume oder dergleichen, **dadurch gekennzeichnet, dass** diese aus einem Einziehfederkörper (12) und einer Einziehfederspitze (1), welche einem der Ansprüche 1 bis 10 entspricht, besteht und dass der Einziehfederkörper (5) als biegsame Welle ausgebildet ist.

13. Einziehfeder nach Anspruch 11 oder 12, **dadurch gekennzeichnet, dass** die Einziehfederspitze (1) abnehmbar, vorzugsweise durch Verschraubung, am Einziehfederkörper (12) befestigt ist.

14. Einziehfeder nach einem der Ansprüche 11 bis 13, **dadurch gekennzeichnet, dass** die minimale auf dem flexiblen Teil der Einziehfederspitze (1) auftretende Flexibilität größer ist als die maximale auf dem Einziehfederkörper (12) auftretende Flexibilität.

15. Einziehfeder nach einem der Ansprüche 11 bis 14, **dadurch gekennzeichnet, dass** der Einziehfederkörper (12) gedrillt ausgeführt ist.

## Claims

1. A draw wire tip (1) for draw wires (12) for drawing wires in tubes and hollow spaces or the like, comprising a base element (2) for fixing to the draw wire, a flexible part (3) and a head element (4), wherein the flexible part (2) comprises a tension rod (13) which is connected at its one end to the base element (2) and at its other end to the head element (4) and comprises a sleeve (16) made of plastic which encloses the tension rod (13), **characterised in that** the flexibility of the flexible part (3) increases from the base element (2) in the direction of the head element (4), wherein the tension rod (13) is extrusion-coated with the sleeve (16) made of plastic, whose layer thickness tapers on at least one section of the flexible part (3) from the base element (2) in the direction towards the head element (4).

2. A draw wire tip (1) according to claim 1, **characterised in that** the flexibility of the flexible part (3) increases linearly from the base element (2) in the direction towards the head element (4).

3. A draw wire tip (1) according to one of the claims 1 to 2, **characterised in that** a holding apparatus (8) for the wire to be drawn through is attached to the head element (4).

4. A draw wire tip (1) according to one of the claims 1 to 3, **characterised in that** a receiver (13a) for a draw wire body (12) is attached to the base element (2).

5. A draw wire tip (1) according to one of the claims 1 to 4, **characterised in that** the ratio of diameter (d₁) of the flexible part (3) on the base element (2) to the diameter (d₂) of the flexible part (3) on the head element (4) lies in a range of 1:0.9 and 1:0.55.

6. A draw wire tip (1) according to one of the claims 1 to 5, **characterised in that** the tension rod (13) of the flexible part (3) consists of a steel cable or carbon fibres.

7. A draw wire tip (1) according to one of the claims 5 to 6, **characterised in that** the ratio of outside diameter (d₁, d₂) of the sleeve (16) to the diameter (d₃) of the tension rod (13) lies between 1:0.1 and 1:0.5.

8. A draw wire tip (1) according to one of the claims 1 to 7, **characterised in that** the tension rod (13) is embedded in or tightly clamped on the head element (4) and/or the base element (2) in a preferably cylindrical hollowed-out portion (14, 15).

9. A draw wire tip (1) according to one of the claims 1 to 8, **characterised in that** the tension rod (13) is pretensioned with respect to the sleeve (16).

10. A draw wire tip (1) according to one of the claims 1 to 9, **characterised in that** a removable cap is provided on the head element (4).

11. A draw wire for drawing wires into tubes or hollow spaces or the like, **characterised in that** it consists of a draw wire body (12) and a draw wire tip (1) which corresponds to one of the claims 1 to 10, and that the draw wire body (5) is preferably made of plastic.

12. A draw wire for drawing wires into tubes or hollow spaces or the like, **characterised in that** it consists of a draw wire body (12) and a draw wire tip (1) which corresponds to one of the claims 1 to 10, and that the draw wire body (5) is arranged as a flexible shaft.

13. A draw wire according to claim 11 or 12, **characterised in that** the draw wire tip (1) is removably fastened to the draw wire body (12), preferably by way of a screwed joint.

14. A draw wire according to one of the claims 11 to 13, **characterised in that** the minimum flexibility occurring on the flexible part of the draw wire tip (1) is larger than the maximum flexibility occurring on the draw wire body (12).

15. A draw wire according to one of the claims 11 to 14, **characterised in that** the draw wire body (12) is provided in a twisted arrangement.

## Revendications

1. Pointe ressort (1) de ressort de tirage (12) pour permettre de tirer des conducteurs dans des tubes et des espaces creux ou similaires, comportant une pièce de talon (2) permettant sa fixation sur le ressort de tirage, une partie flexible (3) et une pièce de tête (4), la partie flexible (3) comportant une ancre de traction (13) qui est reliée à l'une de ses extrémités à la pièce de talon (2) et à son autre extrémité à la pièce de tête (4) et comporte une gaine (16) en matériau synthétique qui entoure l'ancre de traction (13),
**caractérisée en ce que**
la flexibilité de la partie flexible (3) augmente à partir de la pièce de talon (2) en direction de la pièce de tête (4), l'ancre de traction (13) étant recouverte par extrusion par la gaine (16) en matériau synthétique dont l'épaisseur de couche diminue sur au moins un tronçon de la partie flexible (3) à partir de la pièce de talon (2) en direction de la pièce de tête (4).

2. Pointe de ressort de tirage (1) conforme à la revendication 1,
**caractérisée en ce que**
la flexibilité de la partie flexible (3) augmente linéairement à partir de la pièce de talon (2) en direction de la pièce de tête (4).

3. Pointe de ressort de tirage (1) conforme à l'une des revendications 1 et 2,
**caractérisée en ce que**
sur la pièce de tête (4) est monté un dispositif de maintien (8) de la conduite devant être tirée.

4. Pointe de ressort de tirage (1) conforme à l'une des revendications 1 à 3,
**caractérisée en ce que**
sur la pièce de talon (2) est monté un logement de réception (13a) d'un corps de ressort de tirage (12).

5. Pointe de ressort de tirage (1) conforme à l'une des revendications 1 à 4,
**caractérisée en ce que**
le rapport du diamètre (d₁) de la partie flexible (3) au niveau de la pièce de talon (2) au diamètre (d₂) de la partie flexible (3) au niveau de la pièce de tête (4) varie dans une plage de 1:0,9 à 1:0,55.

6. Pointe de ressort de tirage (1) conforme à l'une des revendications 1 à 5,
**caractérisée en ce que**
l'ancre de traction (13) de la partie flexible (3) est réalisée à partir d'un câble en acier ou de fibres de carbone.

7. Pointe de ressort de tirage (1) conforme à l'une des revendications 5 et 6,
**caractérisée en ce que**
le rapport du diamètre externe (d₁, d₂) de la gaine (16) et du diamètre (d₃) de l'ancre de traction (13) varie entre 1:0,1 à 1 :0,5.

8. Pointe de ressort de tirage (1) conforme à l'une des revendications 1 à 7,
**caractérisée en ce qu'**
au niveau de la pièce de tête (4) et/ou de la pièce de talon (2) l'ancre de traction (13) est noyée ou bloquée dans une cavité (14, 15) de préférence cylindrique.

9. Pointe de ressort de tirage (1) conforme à l'une des revendications 1 et 8,
**caractérisée en ce que**
l'ancre de traction (13) est précontrainte par rapport à la gaine (16).

10. Pointe de ressort de tirage (1) conforme à l'une des revendications 1 à 9,
**caractérisée en ce que**
un capuchon amovible est prévu sur la pièce de tête (4).

11. Ressort de tirage pour permettre de tirer des conduites dans des tubes ou des espaces creux ou similaire,
**caractérisé en ce qu'**
il est constitué d'un corps de ressort de tirage (12) et d'une pointe de ressort de tirage (1) conforme à l'une des revendications 1 à 10, et
**en ce que**
le corps de ressort de tirage (5) est de préférence réalisé en matériau synthétique.

12. Ressort de tirage pour permettre de tirer des conduites dans des tubes ou des espaces creux ou similaire,
**caractérisé en ce qu'**
il est constitué d'un corps de ressort de tirage (12) et d'une pointe de ressort de tirage (1) conforme à l'une des revendications 1 à 10, et le corps de ressort de tirage (5) est réalisé sous la forme d'un arbre flexible.

13. Ressort de tirage conforme à la revendication 11 ou 12,
**caractérisé en ce que**
la pointe de ressort de tirage (1) est fixée de manière amovible sur le corps de ressort de tirage (12) de préférence par vissage.

14. Ressort de tirage conforme à l'une des revendications 11 à 13,
**caractérisé en ce que**
la flexibilité minimum de la partie flexible de la pointe de ressort de tirage (1) est supérieure à la flexibilité maximum du corps de ressort de tirage (12).

15. Ressort de tirage conforme à l'une des revendications 11 à 14,
**caractérisé en ce que**
le corps de ressort de tirage (12) est torsadé.
